# EUROPÄISCHE PATENTSCHRIFT

(11) **EP 3 712 343 B1**
(45) Veröffentlichungstag und Bekanntmachung des Hinweises auf die Patenterteilung: **23.04.2025**
(21) Anmeldenummer: 20161044.1
(22) Anmeldetag: 04.03.2020
(51) Int. Cl.: E04D 12/00, B32B 27/40, B32B 27/12, B32B 27/06, B32B 5/02, B32B 7/12, B32B 5/24, B32B 5/18

(54) **DICHTBAHN**
SEALING MEMBRANE
MEMBRANE D'ÉTANCHÉITÉ

(30) Priorität: 18.03.2019 AT 502312019
(43) Veröffentlichungstag der Anmeldung: 23.09.2020
(73) Patentinhaber: Lenzing Plastics GmbH & Co KG, 4860 Lenzing (AT)
(72) Erfinder: Brandstätter, Andreas, 4851 Gampern (AT); Grieshofer, Hubert, 4813 Altmünster (AT)
(74) Vertreter: Fabian, Ferdinand

(56) Entgegenhaltungen:
- EP-A1- 0 708 212
- WO-A1-2016/134941
- DE-A1- 102015 012 015
- DE-A1- 102017 004 350
- DE-A1- 19 504 017
- DE-A1- 4 428 304

## Beschreibung

Die Erfindung betrifft eine nageldichte Dichtbahn, insbesondere Unterdachbahn oder Fassadenbahn für eine geschlossene Fassade, umfassend in dieser Reihenfolge eine erste Vliesschicht, eine Membranschicht und eine zweite Vliesschicht, wobei die erste Vliesschicht Polypropylenfasern umfasst.

Weiter betrifft die Erfindung die Verwendung einer Mehrschichtfolie.

Unterdachbahnen werden dazu verwendet, um Dächer unter der Dacheindeckung wasser-, schnee- und staubdicht ausgestalten zu können. Hierfür sind aus dem Stand der Technik wasserdichte Unterdachbahnen bekannt, die einen zweischichtigen Aufbau mit einer Trägerschicht aus einem Vlies und einer Dichtschicht auf TPU-Basis aufweisen. Beispiele dafür sind die EP 2 592 196 B1, die DE 20 2009 007 315 U1, die DE 20 2010 000 934 U1, wobei letztere auch einen dreischichtigen Aufbau mit beidseitig der Trägerschicht angeordneten Dichtschichten beschreibt.

Mehr als dreischichtige Dachbahnen sind z.B. aus der DE 10 2017 003 364 A1 bekannt, die eine Unterdachbahn beschreibt, mit wenigstens einer außenseitigen Vliesschicht, wenigstens einer innenseitigen Vliesschicht und wenigstens einer mikroporösen Membranschicht auf Basis wenigstens eines polyolefinischen Kunststoffes, wobei die Membranschicht zwischen der außenseitigen Vliesschicht und der innenseitigen Vliesschicht angeordnet ist, und wobei wenigstens eine weitere mikroporöse Membranschicht auf polyolefinischer Kunststoffbasis zwischen der außenseitigen Vliesschicht und der innenseitigen Vliesschicht vorgesehen ist und dass die weitere Membranschicht von der Membranschicht durch eine Trennlage getrennt ist.

Bei der Gewährleistung der Wasserdichtheit einer Unterdachbahn stellt sich unter anderem das Problem, dass auf und durch die Unterdachbahn hindurch Nägel oder Klammen getrieben werden, um die Konterlattung für die Dachziegel anbringen zu können oder um die Unterdachbahn auf die Bretter der Dachschalung zu tackern. Dabei entstehen in der Unterdachbahn Löcher, durch die Wasser in den darunterliegenden Dachaufbau eintreten kann.

Um diesem Problem zu begegnen sind unterschiedlichste Lösungen bekannt. Beispielsweise beschreibt die EP 1 992 761 A1 eine Kunststoffdichtung zur Abdichtung von Durchdringungen bei Dichtungselementen, die in einem Thermoplastschaumguss-Verfahren aus Thermoplasten oder thermoplastischen Elastomeren hergestellt wird.

Ein weiterer üblicher und auch normgerechter Weg diesem Problem zu begegnen ist, so genannte Nageldichtbänder zwischen der Unterdachbahn und der Konterlattung anzubringen. Weiter ist aus der DE 10 2017 004 350 A1 eine nageldichte Unterdachbahn mit einer der Bewitterungsseite zugewandten Oberschicht und einem nageldichten, wenigstens zweilagigen Schichtaufbau bekannt. Die Unterdachbahn ist wasserdicht und/oder wasserdampfdurchlässig ausgeführt. Der nageldichte Schichtaufbau ist mit der Oberschicht verbunden und weist wenigstens eine Dichtschicht und wenigstens eine Schutzschicht auf. Für die einzelnen Schichten werden unterschiedlichste Materialien beschrieben, wie z.B. polyolefinische Kunststoffe, wie Polypropylen, Polyethylen, Ethylen-Vinylacetat-Copolymere, Polyethylenterephthalat, thermoplastische Elastomere, wie thermoplastisches Polyurethan, geschäumte Polymerdispersionen, z.B. auf Basis von Polyurethanen und/oder Polyvinylchlorid und/oder Acrylat.

Der vorliegenden Erfindung liegt die Aufgabe zu Grunde, eine nageldichte Dichtbahn zu schaffen.

Die Aufgabe der Erfindung wird bei der eingangs genannten Dichtbahn dadurch gelöst, dass sie alle Merkmale des Anspruchs 1 umfasst.

Weiter wird die Aufgabe der Erfindung durch die Verwendung einer Mehrschichtfolie als nageldichte Unterdachbahn oder Fassadenbahn für eine geschlossene Fassade gelöst, mit allen Merkmalen des Anspruchs 12.

Von Vorteil ist dabei, dass der Aufbau der Mehrschichtfolie relativ einfach ist und überraschenderweise trotzdem eine Verbesserung der Nageldichtheit im Vergleich mit derzeit auf dem Markt erhältlichen "Nageldichtprodukten" erreicht werden konnte. Die Membranschicht kann zwischen zwei zumindest im Wesentlichen gleich ausgestalteten Vliesschichten eingebettet bzw. angeordnet werden, wobei eine Trennung in eine Oberschicht und einen nageldichten Schichtaufbau, wie er aus der genannten DE 10 2017 004 350 A1 bekannt ist, nicht erforderlich ist.

Der Begriff "nageldicht" wird wie in der DE 10 2017 004 350 A1 definiert verwendet. Dementsprechend ist eine Unterdachbahn nageldicht, wenn sie trotz Durchdringung mit einem Befestigungsmittel, wie eben einem Nagel oder einer Klammer, nach wie vor wasserdicht im Sinne der ÖNORM B3647:2005 ist.

Gemäß einer bevorzugten Ausführungsvariante des Dichtbahn ist vorgesehen, dass diese aus der ersten Vliesschicht, der Membranschicht und der zweiten Vliesschicht besteht, womit mit nur einem dreischichtigen Aufbau die voranstehenden Effekte erreicht werden. Die Dichtbahn kann daher im Rahmen der einschlägigen Normen relativ dünn ausgeführt werden, wodurch nicht nur Lagerplatz, sondern auch Transportvolumen eingespart werden kann.

Obwohl PET-Fasern für den Fachmann aufgrund deren Temperaturbelastbarkeit als Werkstoff für die Vliese der Dichtbahn vorteilhafter wären, haben überraschenderweise Vliese aus/mit Polypropylenfasern in der Evaluierung der Dichtbahn die besseren/besten Ergebnisse gezeigt. Aus diesem Grund kann nach einer bevorzugten Ausführungsvariante der Dichtbahn auch vorgesehen sein, dass die erste und die zweite Vliesschicht aus Polyproylenfasern bestehen.

Es kann gemäß einer weiteren Ausführungsvariante der Dichtbahn vorgesehen sein, dass die erste und/oder die zweite Vliesschicht zumindest zwei verschiedene Faserarten aufweist. Mit der zweiten Faserart kann in die Vliesschicht(en) eine mechanische Verstärkung eingebaut werden, wodurch diese auch eine höhere (Weiter-)Reißfestigkeit aufweisen können.

Erfindungsgemäß weist die zweite Vliesschicht ein Flächengewicht zwischen 40 g/m2 und 200 g/m2 auf, während die erste Vliesschicht ein Flächengewicht zwischen 60 g/m2 und 200 g/m2 aufweist.

Die Dichtbahn kann damit Vliesschichten aufweisen, die einen relativ hohen Raumfüllungsgrad mit Fasern aufweisen, wodurch jede Vliesschicht an sich schon dichter ausgeführt sein kann. Darüber hinaus kann damit auch der Grad der Faserbeweglichkeit in der Vliesschicht reduziert werden, wodurch die Gefahr, dass beim Nageln Fasern in die benachbarten Schichten mitgerissen und eine Art Dochtwirkung/Saugwirkung erzeugen, vermieden werden kann.

Das thermoplastische Elastomer kann gemäß einer weiteren Ausführungsvariante der Dichtbahn ein geschäumtes thermoplastisches Elastomer sein, womit das Gesamtflächengewicht der Unterdachbahn bei gleicher Gesamtschichtdicke reduziert werden kann.

Nach einer Ausführungsvariante dazu kann das geschäumte thermoplastische Elastomer ein geschlossenzelliger Elastomerschaum sein. Durch die Geschlossenzelligkeit kann die Wasserdichtheit der Dichtbahn erhöht werden.

Im Zuge von durchgeführten Tests konnte festgestellt werden, dass für die Ausbildung der Nageldichtheit ein thermoplastisches Polyurethan ein besonders geeignetes Material für die Membranschicht ist.

Vorzugsweise ist dabei gemäß einer Ausführungsvariante das thermoplastische Polyurethan ein thermoplastisches Polyether-Polyurethan. Es kann damit die Kälteflexibilität der Dichtbahn verbessert werden, womit die Nageldichtheit der Unterdachbahn auch bei tieferen Temperaturen nicht verlorengeht.

Aus den gleichen Gründen kann gemäß einer weiteren Ausführungsvariante vorgesehen sein, dass das thermoplastische Polyurethan ein aromatisches thermoplastisches Polyether-Polyurethan ist.

Nach einer anderen Ausführungsvariante kann vorgesehen sein, dass das thermoplastische Polyurethan aus zumindest einem Diol und zumindest einem Polyol jeweils durch Reaktion mit zumindest einem Diisocyanat gebildet ist, wobei das molekulare Verhältnis von Diol/Polyol zwischen 10 : 1 und 1 : 10 beträgt. Es können damit die Anteile der Hart- und Weichsegmente an der Struktur des thermoplastischen Polyurethans beeinflusst werden. Innerhalb der angegebenen Grenzen konnte dabei festgestellt werden, dass die Membranschicht zwar noch ausreichend flexibel ist, dass sie sich beim Eindringen eines Nagels (oder dergleichen) an diesen anlegt und damit die Nageldichtheit verbessert. Andererseits weist sie damit aber auch eine höhere Eigensteifigkeit auf, die wiederum für die mechanische Belastbarkeit der Membranschicht von Vorteil ist. Letzteres erlaubt zumindest eine der Vliesschichten und/oder die Membranschicht dünner auszuführen.

Zur weiteren Verbesserung der Nageldichtheit kann vorgesehen sein, dass die erste und/oder die zweite Vliesschicht hydrophobiert ist/sind.

Ebenfalls zur Verbesserung der Nageldichtheit kann auch vorgesehen sein, dass die Membranschicht nur bereichsweise, insbesondere nur punktuell, mit der ersten und/oder der zweiten Vliesschicht verbunden ist. Dies ermöglicht eine bessere Beweglichkeit der Membranschicht, womit Spannungen im Schichtaufbau, z.B. in Folge von Temperaturschwankungen, besser vermieden werden können. Dies wiederum erlaubt der Membranschicht sich besser an die Durchdringungsgegenstände, wie z.B. Nägel, anzulegen.

Zum besseren Verständnis der Erfindung wird diese anhand der nachfolgenden Figur näher erläutert.

Es zeigt in vereinfachter, schematischer Darstellung:

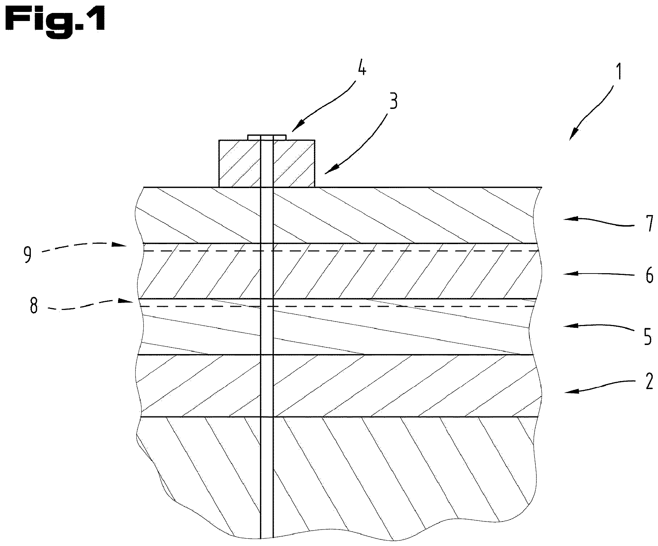

- Fig. 1: einen Ausschnitt aus einer Unterdachbahn im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Es sei bereits an dieser Stelle darauf hingewiesen, dass Angaben zu Normen so zu verstehen sind, dass die jeweiligen Normen in der am Anmeldetag dieser bzw. der prioritätsbegründenden Patentanmeldung gültigen Fassung gemeint sind, sofern nicht etwas anderes angegeben ist.

In Fig. 1 ist ein Ausschnitt aus einer als Mehrschichtfolie ausgebildeten Unterdachbahn 1 im Querschnitt dargestellt.

Die Unterdachbahn 1 dient als zweite wasserableitende Schicht unter der Dacheindeckung, z.B. mit Ziegel, zum Schutz gegen Treib-, Kapillar-, Stau- und Kondenswasser oder Schmutz.

Die Unterdachbahn 1 liegt im dargestellten Ausführungsbeispiel direkt an einer Dachschalung 2 auf. Die Dachschalung 2 kann beispielsweise durch (sägeraue) Holzbretter gebildet sein. Auf der Außenseite ist beispielhaft eine Latte 3 einer Konterlattung dargestellt. Die Konterlattung trägt bekanntlich die Lattung für die Dachziegel. Die Latte 3 ist mit einem Befestigungsmittel, im dargestellten Beispiel einem Nagel 4, mit der Dachunterkonstruktion verbunden. Dazu durchdringt das Befestigungsmittel die Unterdachbahn 1. Um nun zu vermeiden, dass Wasser an den Stellen der Durchdringungen mit den Befestigungsmittel in den Dachunterbau, z.B. die Wärmedämmung, eintreten kann, ist die Unterdachbahn 1 nageldicht ausgeführt. Zudem ist sie an sich wasserdicht und dampfdiffusionsoffen ausgeführt.

Mit wasserdicht ist gemeint, dass die Unterdachbahn 1 die Anforderungen der EN 13859 Teil 1/2 erfüllt.

Mit dampfdiffusionsoffen ist gemeint, dass die Wasserdampfdurchlässigkeit Sd gemäß EN 13859 Teil 1/2 zwischen 0,02 m und 0,5 m beträgt.

Es sei an dieser Stelle erwähnt, dass der beschriebene Dachaufbau nur beispielhaften Charakter hat. Der Dachaufbau kann auch anders ausgeführt sein. Demzufolge kann die Unterdachbahn 1 (auch als Unterdeckbahn bezeichenbar) auch eine sogenannte Unterspannbahn sein. Im Rahmen dieser Beschreibung wird jedoch nicht zwischen diesen Begrifflichkeiten unterschieden, sondern werden diese Ausführungen von Dachbahnen unter den Begriff "Unterdachbahn 1" subsumiert. Weiter kann die Mehrschichtfolie auch eine Fassadenbahn für geschlossene Fassaden sein. Sämtliche folgenden Ausführungen zur Unterdachbahn 1 können daher auch auf die Fassadenbahn angewandt werden, sofern nicht etwas anderes angegeben ist.

Weiter sei darauf hingewiesen, dass die Dichtbahn nach der Erfindung eine Breite von mindestens 0,3 m, insbesondere zwischen 0,5 m und 2 m, aufweist. Die Breite wird dabei in einem Winkel von 90 ° zur Wickelrichtung der Dichtbahn auf einer Rolle gemessen.

Die Unterdachbahn 1 besteht in der dargestellten Ausführungsvariante aus drei Schicht, nämlich einer ersten Vliesschicht 5, einer Membranschicht 6 und einer zweiten Vliesschicht 7. Die erste Vliesschicht 5 ist der Dachschalung 2 zugewandt und liegt auf dieser auf (Im Falle einer Unterspannbahn ist die Dachschalung 2 nicht vorhanden). Die zweite Vliesschicht 7 ist der bewitterten Seite der Unterdachbahn 1 zugewandt. Die Membranschicht 6 ist zwischen diesen beiden Vliesschichten 5, 7 angeordnet und bewirkt die Wasserdichtheit, die Wasserdampfdiffusionsoffenheit und die Nageldichtheit.

Obwohl der Dreischichtaufbau eine bevorzugte Ausführungsvariante der Unterdachbahn 1 ist, besteht auch die Möglichkeit, dass die Unterdachbahn 1 mehr als drei Schichten aufweist, wobei anders als bei der Anordnung der Schichten jeweils direkt übereinander, wie dies in Fig. 1 dargestellt ist, die erste Vliesschicht 5 mit der Membranschicht 6 über eine Kleberschicht 8 und/oder die Membranschicht 6 mit der zweiten Vliesschicht 7 über eine Kleberschicht 9 verbunden ist, wie dies in Fig. 1 mit srichlierten Linien angedeutet ist.

Die erste Vliesschicht 5 weist ein Vlies mit Polypropylenfasern auf bzw. besteht aus einem Polypropylenfaservlies. Sofern die erste Vliesschicht 5 noch andere Fasern enthält, können diese ausgewählt sein aus einer Gruppe umfassend oder bestehend aus Polyesterfasern, Polyamidfasern. Der Anteil an Polypropylenfasern an der ersten Vliesschicht 5 beträgt zumindest 50 Gew.-%, insbesondere zumindest 70 Gew.-%, kann aber auch 100 Gew.-% betragen. Die Fasern der ersten Vliesschicht 5 sind bevorzugt Endlosfasern, das Vlies bevorzugt ein Spinnvlies. Weiter können die Fasern der ersten Vliesschicht 5 eine Faserfeinheit zwischen 1,5 dtex und 5 dtex, insbesondere zwischen 1,7 dtex und 3,5 dtex, gemäß DIN 53830, Teil 3 aufweisen.

Sofern in der ersten Vliesschicht 5 neben den Polypropylenfasern noch andere Fasern vorhanden sind, können dieses verstärkend für die erste Vliesschicht 5 wirken. Diese weiteren Fasern können beispielswiese als Gewebeverstärkung in gewobener Form oder als Verstärkungsgitter, etc., in bzw. innerhalb der ersten Vliesschicht 5 vorliegen. Dabei können diese Verstärkungsfasern auch dicker sein als die Polyproplyenfasern. Beispielsweise können die Verstärkungsfasern der ersten Vliesschicht 5 einen mittleren Faserdurchmesser aufweisen, ausgewählt aus einem Bereich von der Dicke der Polypropylenfasern bis 0,5 mm.

Die erste Vliesschicht 5 kann eine Schichtdicke zwischen 0,25mm und 0,95mm, insbesondere zwischen 0,3 mm und 0,6 mm, aufweisen.

Die erste Vliesschicht 5 weist ein Flächengewicht zwischen 60 g/m**²** und 200 g/m**²**, auf.

Das Polypropylen der Polypropylenfasern ist insbesondere ein apolares Polypropylen. Weiter ist es bevorzugt Homo-Polypropylen mit einem MFI von 12 g/10min bis 25 g/10min (Melt Flow Index, ISO 1133).

Vorzugsweise wird für die Herstellung der Polypropylenfasern eine Polypropylenfolie eingesetzt.

Die zweite Vliesschicht 7 weist ein Vlies mit Polypropylenfasern auf bzw. besteht aus einem Polypropylenfaservlies. Sofern die zweite Vliesschicht 7 noch andere Fasern enthält, können diese ausgewählt sein aus einer Gruppe umfassend oder bestehend aus Polyesterfasern, Poylamidfasern. Der Anteil an Polypropylenfasern an der zweiten Vliesschicht 7 beträgt zumindest 50 Gew.-%, insbesondere zumindest 70 Gew.-%, kann aber auch 100 Gew.-% betragen.

Die Fasern der zweiten Vliesschicht 7 sind bevorzugt Endlosfasern, das Vlies bevorzugt ein Spinnvlies. Weiter können die Fasern der zweiten Vliesschicht 7 eine Faserfeinheit zwischen 1,5 dtex und 5 dtex, insbesondere zwischen 1,7 dtex und 3,5 dtex, gemäß DIN 53830, Teil 3 aufweisen.

Sofern in der zweiten Vliesschicht 7 neben den Polypropylenfasern noch andere Fasern vorhanden sind, können dieses verstärkend für die zweite Vliesschicht 7 wirken. Diese weiteren Fasern können beispielswiese als Gewebeverstärkung in gewobener Form oder als Verstärkungsgitter, etc., in bzw. innerhalb der zweiten Vliesschicht 7 vorliegen. Dabei können diese Verstärkungsfasern auch dicker sein als die Polyproplyenfasern. Beispielsweise können die Verstärkungsfasern der zweiten Vliesschicht 7 einen mittleren Faserdurchmesser aufweisen, ausgewählt aus einem Bereich von der Dicke der Polypropylenfasern bis 0,5 mm.

Die zweite Vliesschicht 7 kann eine Schichtdicke zwischen 0,25mm und 0,95mm, insbesondere zwischen 0,3 mm und 0,6 mm, aufweisen.

Die zweite Vliesschicht 7 weist ein Flächengewicht zwischen 40 g/m**²** und 200 g/m**²** insbesondere zwischen 40 g/m**²** und 150 g/m**²**, auf.

Das Polypropylen der Polypropylenfasern ist insbesondere ein apolares Polypropylen. Weiter ist es bevorzugt Homo-Polypropylen mit einem MFI von 12 g/10min bis 25 g/10min (Melt Flow Index, ISO 1133).

Vorzugsweise wird für die Herstellung der Polypropylenfasern eine Polypropylenfolie eingesetzt.

Die zweite Vliesschicht 7 kann gleich ausgebildet sein, wie erste Vliesschicht 5. Vorzugsweise ist die zweite Vliesschicht 7 aber ungleich der ersten Vliesschicht 5. Insbesondere kann die zweite Vliesschicht 7 ein geringeres Flächengewicht aufweisen, also die erste Vliesschicht 5. Die Membranschicht 6 ist auf Basis eines thermoplastischen Elastomers oder eines geschäumten thermoplastischen Elastomers gebildet bzw. besteht aus einem thermoplastischen Elastomer oder einem geschäumten thermoplastischen Elastomer. Aus diesem Grund wird im Folgenden der Begriff "geschäumt" in Klammer gesetzt, da sich diese Ausführungen sowohl auf geschäumte als auch auf nicht geschäumte thermoplastische Elastomere beziehen, sofern nicht etwas anderes angegeben ist.

Die Membranschicht 6 kann auch als geschäumte Folie bezeichnet werden.

Vorzugsweise ist die Membranschicht 6 eine monolithische thermoplastische (geschäumte) Elastomerschicht.

Die Schichtdicke der Membranschicht 6 kann ausgewählt sein aus einem Bereich von 20 µm bis 100 µm, insbesondere aus einem Bereich von 20 µm bis 50 µm.

Gemäß einer Ausführungsvariante der Unterdachbahn 1 kann das geschäumte thermoplastische Elastomer ein geschlossenzelliger Elastomerschaum sein.

Es ist aber auch möglich, dass das geschäumte thermoplastische Elastomer ein offenzelliger Elastomerschaum ist.

Besonders bevorzugt ist das thermoplastische Elastomer ein (geschäumtes) thermoplastisches Polyurethan. Das thermoplastische Polyurethan kann ein Polyester-Polyurethan sein, d.h. dass zur Herstellung Polyester-Polyole eingesetzt worden sind. Gemäß einer anderen Ausführungsvariante kann aber auch vorgesehen werden, dass das thermoplastische Polyurethan ein Polyether-Polyurethan ist, d.h. dass zur Herstellung Polyether-Polyole eingesetzt worden sind.

Es ist weiter möglich, dass das (geschäumte) thermoplastische Polyurethan ein aliphatisches thermoplastisches Polyurethan ist. Nach einer Ausführungsvariante kann aber auch vorgesehen sein, dass das (geschäumte) thermoplastische Polyurethan ein aromatisches thermoplastisches Polyurethan ist.

Das thermoplastische Polyurethan ist insbesondere vom MDI- (Methylendi(phenylisocyanat)) oder vom TDI-Typ (Toluoldiisocyanat). Die einsetzbaren Isocyanate dieser Typen sind dem Fachmann bekannt, z.B. 2,4' -MDI and 4,4' -MDI, 2,4'- TDI, 2, 6' -TDI. Neben diesen Isocyanaten können auch andere Isocyanate eingesetzt werden, wie z.B. 1,5 - Naphthylendiisocyanate (NDI), p-PhenylendDiisocyanate (PPDI), 1,6-Hexamethylendiisocyanate (HDI), wenngleich diese Isocyanate nicht bevorzugt sind.

Das thermoplastische Polyurethan kann aus zumindest einem Diol und zumindest einem Polyol jeweils durch Reaktion mit zumindest einem Diisocyanat gebildet sein, wobei das molekulare Verhältnis von Diol/Polyol zwischen 10 : 1 und 1 : 10, insbesondere 1: 6 bis 1 :8, betragen kann. Vorzugsweise wird ein Verhältnis von Diol zu Polyol gewählt, dass die Härte des thermoplastischen (geschäumten) Polyurethans gemäß DIN ISO 7619-1 (3s) zwischen 70 Shore A und 95 Shore A beträgt.

Mögliche Diole sind Diole der allgemeinen Formel HO-(CH₂)n-OH, mit n = 2 bis 20, wie Ethylenglykol, Propandiol-(1 ,3), Butandiol-(1 ,4) oder Hexandiol-(1 ,6), ungesättigte Diole, wie bspw. Butendiol-(1 ,4).

Mögliche Polyole sind Polyetherole der allgemeinen Formel HO-(CH₂)n-0-(CH₂)m-OH, wobei n gleich oder ungleich m und n bzw. m = 2 bis 20. Andere Polyole sind Polyole die durch Reaktion von Aklylenoxide, z.B. Propylenoxid, mit starken Basen, wie KOH, und gegebenenfalls einem Glycol, erhalten werden. Weiter können Polymersationspordukte von Tetrahydrofuran oder Epoxiden, wie z.B. Epichlorhydrin, Ethylenoxiden, Propylenoxiden, Butylenoxiden, Styroloxid, erhalten werden.

Derartige Diole und Polyole für die Herstellung von thermoplastischen Polyurethanen sind dem Fachmann bekannt, sodass sich eine weitere Erörterung an dieser Stelle erübrigt.

Zum Aufschäumen des thermoplastischen Elastomers, insbesondere des thermoplastischen Polyurethans, kann ein Treibmittel eingesetzt werden, das ausgewählt ist aus einer Gruppe umfassend CO₂, N₂. Generell kann ein physikalisches und/oder chemisches Treibmittel zur Erzeugung der Schaumstruktur eingesetzt werden. Bevorzugt sind physikalische Treibmittel wie zum Beispiel Alkane, wie Butan, Pentan, Cyclopentan oder Octan, Carbonylverbindungen, wie Aceton, Alkohole wie Ethanol, Inertgase wie Argon, oder eben Stickstoff und/oder Kohlenstoffdioxid. Als chemisches Treibmittel kann beispielsweise kann ein Treibmittel eingesetzt werden, das unter (thermischer) Zersetzung ein Gas abspaltet. Beispiele hierfür sind Zitronensäure, Hydrogencarbonate oder Azodicarbonamide.

Der Anteil des Treibmittels an der gesamten Reaktionsmischung kann ausgewählt sein aus 1 Gew.-% bis 20 Gew.-%.

Die Membranschicht 6 kann mit üblichen Folienherstellungsverfahren, gegebenenfalls durch Aufextrudieren auf die Vliesschicht(en) 5 und/oder 7, hergestellt werden. Sie kann aber auch durch Schaumextrusion hergestellt werden, wobei diesem Fall das schäumfähige Gemisch auch direkt auf die erste und/oder zweite Vliesschicht 5, 7 aufextrudiert werden kann. Da die Schaumextrusion an sich bekannt ist, erübrigen sich weitere Ausführungen dazu. Der Fachmann sei dazu an die einschlägige Literatur verwiesen.

Die einzelnen Schichten der Unterdachbahn 1 können aber auch durch Ultraschallschweißen und/oder durch mechanisches Verbinden, etc., miteinander verbunden werden. Neben der direkten Verbindung der einzelnen Schichten kann auch eine Verklebung derselben mit einem Klebstoff erfolgen.

Vor der Verbindung der einzelnen Schichten miteinander kann es gegebenenfalls von Vorteil sein, wenn die erste und/oder zweite Vliesschicht 5, 7 vorbehandelt wird, beispielsweise mittels einer Coronabehandlung.

Zur weiteren Verbesserung der Nageldichtheit kann vorgesehen sein, dass die erste und/oder die zweite Vliesschicht 5, 7 hydrophobiert ist/sind. Zur Hydrophobierung der Polypropylenfasern kann ein Hydrophobierungsmittel eingesetzt werden, das ausgewählt ist aus einer Gruppe umfassend oder bestehend aus Alkoxysilane, z.B. anhydrolisierte Silane, niedermolekulare Alkylalkoxysiloxane, Octyltriethoxysilan, Alkoxysiloxane, z.B. oligomere Alkylalkoxysiloxane, Alkylpolysiloxane, z.B. polymere Siloxane, Alkalisilikonate, z.B. KaliumMethylsilikonat, oder Gemische aus den genannten Stoffgruppen, wie z.B. Silan-Siloxan-Gemische.

Der Anteil an Hydrophobierungsmittel an der ersten und/oder zweiten Vliesschicht 5, 7 kann ausgewählt sein aus einem Bereich von 1 Gew.-% bis 30 Gew.-%, beispielsweise aus einem Bereich von 1 Gew.-% bis 10 Gew.-%.

Die erste Vliesschicht 5 und/oder die zweite Vliesschicht 7 kann/können vollflächig mit der Membranschicht 6 verbunden sein, d.h. über die gesamten aneinander anliegenden Flächen. Gemäß einer bevorzugten Ausführungsvariante besteht aber auch die Möglichkeit, dass die Membranschicht 6 nur bereichsweise, insbesondere nur punktuell, mit der ersten und/oder der zweiten Vliesschicht 5, 7 verbunden ist. Die Verbindungspunkte können dabei in einem Abstand zueinander angeordnet sein, der ausgewählt ist aus einem Bereich von 01 mm bis 5mm. Der Abstand ist dabei der kürzeste Abstand zwischen jeweils zwei unmittelbar benachbart angeordneten Verbindungspunkten. Die Verbindungspunkte können in Form eines Netzes (Quadrat, Rechteck, Raute, etc.) angeordnet sein.

Zur Evaluierung der Unterdachbahn 1 wurden u.a. folgende Beispiele erprobt.

### Beispiel 1:

Es wurde eine Unterdachbahn 1 hergestellt, die folgenden Aufbau hatte:
Vliesschicht 5: Polyproplyen-Endlosfaservlies, 75 g/m**²**
Kleberschicht 8: Hotmelt-Kleber
Membranschicht 6. Thermoplastisches Polyurethan, 25 µm
Kleberschicht 9: Hotmelt-Kleber
Vliesschicht 7: Polyproplyen-Endlosfaservlies, 75 g/m**²**

### Beispiel 2 (nicht nach der Erfindung) :

Es wurde eine Unterdachbahn 1 hergestellt, die folgenden Aufbau hatte:
Vliesschicht 5: Polyproplyen-Endlosfaservlies, 75 g/m**²**
Kleberschicht 8: Hotmelt-Kleber
Membranschicht 6. Thermoplastisches Polyurethan, 25 µm
Kleberschicht 9: Hotmelt-Kleber
Vliesschicht 7: Polyproplyen-Endlosfaservlies, 30 g/m**²**

### Beispiel 3:

Es wurde eine Unterdachbahn 1 hergestellt, die folgenden Aufbau hatte:
Vliesschicht 5: Polyproplyen-Endlosfaservlies, 95 g/m**²**
Kleberschicht 8: Hotmelt-Kleber
Membranschicht 6. Thermoplastisches Polyurethan, 25 µm
Kleberschicht 9: Hotmelt-Kleber
Vliesschicht 7: Polyproplyen-Endlosfaservlies, 95 g/m**²**

### Beispiel 4:

Es wurde eine Unterdachbahn 1 hergestellt, die folgenden Aufbau hatte:
Vliesschicht 5: Polyproplyen-Endlosfaservlies, 80 g/m**²**
Membranschicht 6. Thermoplastisches Polyurethan, 100 g/m**²**, eine Direktbeschichtung der Vliesschicht 5
Vliesschicht 7: Polyproplyen-Endlosfaservlies, 80 g/m**²**

### Beispiel 5:

Es wurde eine Unterdachbahn 1 hergestellt, die folgenden Aufbau hatte:
Vliesschicht 5: Polyproplyen-Endlosfaservlies, 80 g/m**²**
Membranschicht 6. Thermoplastisches Polyurethan, 100 g/m**²**, zwei Beschichtungen zu je 50 g/m**²**
Vliesschicht 7: Polyproplyen-Endlosfaservlies, 80 g/m**²**

An diesen Beispiel-Unterdachbahnen 1 wurde die Nageldichtheit mit folgendem Test anhand von Testmustern mit 500 mm durchgeführt. Dazu wurden die Testmuster auf eine sägeraue Dachschalung mit Überlappstoß aufgebracht. Die Konterlatten waren ebenfalls sägerau. Der Überlappstoß wurde verklebt. Vor der Anordnung der Testmuster wurde auf die Dachschalung ein gefärbtes Krepppapier vollflächig aufgelegt. Es wurden in der Folge insgesamt 24 handelsübliche Nägel durch die Dachlatten genagelt.

### Testbedingungen:

Dachneigung: 14 °
5 Minuten rinnendes Wasser (8 l/min)
5 Minuten rinnendes Wasser (8 l/min) + sprühendes Wasser (4 l/min)
10 Minuten rinnendes Wasser (8 l/min) + sprühendes Wasser (4 l/min) + Wind (12 m/s mit Gebläse)
10 Minuten rinnendes Wasser (8 l/min) + sprühendes Wasser (4 l/min) + Wind (16 m/s mit Gebläse)

Nach Testdurchführung wurden die Latten und die Unterdachbahn 1 wieder entfernt und eine Sichtprüfung des Krepppapiers vorgenommen. Ein Wasserdurchtritt kann anhand einer Verfärbung des Krepppapiers festgestellt werden. Das Volumen an durchgetretenem Wasser kann anhand des Durchmessers der verfärbten Stelle bestimmt werden. Ein Wassertropfen verursacht einen Fleck mit einer Größe von 25 mm Durchmesser. Bei zwei Wassertropfen hat der Fleck einen Durchmesser von 35 mm und bei 5 Wassertropfen einen Durchmesser von 50 mm.

Von den 24 Nagelstellen wurden bei der Unterdachbahn nach Beispiel 1 lediglich bei drei ein Wasserdurchtritt festgestellt, wobei die Größe der Flecken deutlich unter 25 mm Durchmesser betrug.

Die Unterdachbahn 1 kann daher als nageldicht bezeichnet werden.

Ähnliche Ergebnisse lieferten die Beispiele 2 bis 5, wobei Beispiel 5 ein besseres Ergebnis lieferte als Beispiel 4.

Die Ausführungsbeispiele zeigen bzw. beschreiben mögliche Ausführungsvarianten der Dichtbahn, wobei an dieser Stelle bemerkt sei, dass auch Kombinationen der einzelnen Ausführungsvarianten untereinander möglich sind, innerhalb der von den Ansprüchen definierten Grenze.

Der Ordnung halber sei abschließend darauf hingewiesen, dass zum besseren Verständnis des Aufbaus der der Dichtbahn diese bzw. dessen Bestandteile nicht zwingenderweise maßstäblich dargestellt sind.

### Bezugszeichenaufstellung

- 1: Unterdachbahn
- 2: Dachschalung
- 3: Latte
- 4: Nagel
- 5: Vliesschicht
- 6: Membranschicht
- 7: Vliesschicht
- 8: Kleberschicht
- 9: Kleberschicht

## Patentansprüche

1. Nageldichte Dichtbahn, insbesondere Unterdachbahn (1) oder Fassadenbahn, umfassend in dieser Reihenfolge eine erste Vliesschicht (5), eine Membranschicht (6) und eine zweite Vliesschicht (7), wobei die erste Vliesschicht (5) Polypropylenfasern und die zweite Vliesschicht (7) Polypropylenfasern umfassen und die Membranschicht (6) auf Basis eines thermoplastischen Elastomers gebildet ist, die zweite Vliesschicht (7) ein Flächengewicht zwischen 40 g/m**²** und 200 g/m**²** aufweist, und die erste Vliesschicht (5) ein Flächengewicht zwischen 60 g/m**²** und 200 g/m**²** aufweist, **dadurch gekennzeichnet, dass** die Dichtbahn aus der ersten Vliesschicht (5), der Membranschicht (6) und der zweiten Vliesschicht (7) besteht wobei die erste Vliesschicht (5) gegebenenfalls mit der Membranschicht (6) über eine Kleberschicht (8) und/oder die Membranschicht (6) gegebenenfalls mit der zweiten Vliesschicht (7) über eine Kleberschicht (9) verbunden ist.

2. Nageldichte Dichtbahn nach Anspruch 1, **dadurch gekennzeichnet, dass** die erste und die zweite Vliesschicht (5, 7) aus Polyproylenfasern bestehen.

3. Nageldichte Dichtbahn nach Anspruch 1, **dadurch gekennzeichnet, dass** die erste und/oder die zweite Vliesschicht (5, 7) zumindest zwei verschiedene Faserarten aufweist.

4. Nageldichte Dichtbahn nach einem der Ansprüche 1 bis 3, **dadurch gekennzeichnet, dass** das thermoplastische Elastomer ein geschäumtes thermoplastisches Elastomer ist.

5. Nageldichte Dichtbahn nach einem der Anspruch 4, **dadurch gekennzeichnet, dass** das geschäumte thermoplastische Elastomer ein geschlossenzelliger Elastomerschaum ist.

6. Nageldichte Dichtbahn nach einem der Ansprüche 1 bis 5, **dadurch gekennzeichnet, dass** das thermoplastische Elastomer ein thermoplastisches Polyurethan ist.

7. Nageldichte Dichtbahn nach Anspruch 6, **dadurch gekennzeichnet, dass** das thermoplastische Polyurethan ein thermoplastisches Polyether-Polyurethan ist.

8. Nageldichte Dichtbahn nach Anspruch 6 oder 7, **dadurch gekennzeichnet, dass** das thermoplastische Polyurethan ein aromatisches thermoplastisches Polyurethan ist.

9. Nageldichte Dichtbahn nach Anspruch 6 bis 8, **dadurch gekennzeichnet, dass** das thermoplastische Polyurethan aus zumindest einem Diol und zumindest einem Polyol jeweils durch Reaktion mit zumindest einem Diisocyanat gebildet ist, wobei das molare Verhältnis von Diol/Polyol zwischen 10 : 1 und 1 : 10 beträgt.

10. Nageldichte Dichtbahn nach einem der Ansprüche 1 bis 9, **dadurch gekennzeichnet, dass** die erste und/oder die zweite Vliesschicht (5, 7) hydrophobiert ist.

11. Nageldichte Dichtbahn nach einem der Ansprüche 1 bis 10, **dadurch gekennzeichnet, dass** die Membranschicht (6) nur bereichsweise, insbesondere nur punktuell, mit der ersten und/oder der zweiten Vliesschicht (5, 7) verbunden ist.

12. Verwendung einer Mehrschichtfolie umfassend in dieser Reihenfolge eine erste Vliesschicht (5), eine Membranschicht (6) und eine zweite Vliesschicht (7), wobei die erste und die zweite Vliesschicht (5, 7) Polypropylenfasern umfassen, und wobei die erste Vliesschicht (5) ein Flächengewicht zwischen 60 g/m**²** und 200 g/m**²** und die zweite Vliesschicht (7) ein Flächengewicht zwischen 40 g/m**²** und 200 g/m**²** aufweisen, und die Membranschicht (6) auf Basis eines thermoplastischen Elastomers gebildet ist, als nageldichte Unterdachbahn (1) oder Fassadenbahn für eine geschlossene Fassade, wobei die Dichtbahn aus der ersten Vliesschicht (5), der Membranschicht (6) und der zweiten Vliesschicht (7) besteht wobei die erste Vliesschicht (5) gegebenenfalls mit der Membranschicht (6) über eine Kleberschicht (8) und/oder die Membranschicht (6) gegebenenfalls mit der zweiten Vliesschicht (7) über eine Kleberschicht (9) verbunden ist.

13. Verwendung nach Anspruch 12, **dadurch gekennzeichnet, dass** die nageldichte Unterdachbahn (1) oder Fassadenbahn als Dichtbahn entsprechend einem der Ansprüche 2 bis 11 gebildet ist.

## Claims

1. Nail-tight sealing membrane, in particular under-roof membrane (1) or façade membrane, comprising, in this order, a first nonwoven layer (5), a membrane layer (6) and a second nonwoven layer (7), the first nonwoven layer (5) comprising polypropylene fibers and the second nonwoven layer (7) comprising polypropylene fibers and the membrane layer (6) being formed on the basis of a thermoplastic elastomer, the second nonwoven layer (7) having a weight per unit area of between 40 g/m**²** and 200 g/m**²**, and the first nonwoven layer (5) has a weight per unit area of between 60 g/m**²** and 200 g/m**²**, **characterized in that** the sealing membrane comprises the first nonwoven layer (5), the membrane layer (6) and the second nonwoven layer (7), the first nonwoven layer (5) optionally being bonded to the membrane layer (6) via an adhesive layer (8) and/or the membrane layer (6) optionally being bonded to the second nonwoven layer (7) via an adhesive layer (9).

2. The nail-tight sealing membrane according to claim 1, **characterized in that** the first and second nonwoven layers (5, 7) consist of polypropylene fibres.

3. The nail-tight sealing membrane according to claim 1, **characterized in that** the first and/or the second nonwoven layer (5, 7) has at least two different types of fibres.

4. The nail- tight sealing membrane according to one of claims 1 to 3, **characterized in that** the thermoplastic elastomer is a foamed thermoplastic elastomer.

5. The nail-tight sealing membrane according to one of the claims 4, **characterized in that** the foamed thermoplastic elastomer is a closed-cell elastomer foam.

6. The nail- tight sealing membrane according to one of claims 1 to 5, **characterized in that** the thermoplastic elastomer is a thermoplastic polyurethane.

7. The nail-tight sealing membrane according to claim 6, **characterized in that** the thermoplastic polyurethane is a thermoplastic polyether polyurethane.

8. The nail-tight sealing membrane according to claim 6 or 7, **characterized in that** the thermoplastic polyurethane is an aromatic thermoplastic polyurethane.

9. The nail-tight sealing membrane according to claim 6 to 8, **characterized in that** the thermoplastic polyurethane is formed from at least one diol and at least one polyol in each case by reaction with at least one diisocyanate, the molar ratio of diol/polyol being between 10:1 and 1:10.

10. The nail- tight sealing membrane according to one of claims 1 to 9, **characterized in that** the first and/or the second nonwoven layer (5, 7) is hydrophobized.

11. The nail-tight sealing membrane according to one of claims 1 to 10, **characterized in that** the membrane layer (6) is only connected to the first and/or the second nonwoven layer (5, 7) in certain areas, in particular only at certain points.

12. Use of a multilayer film comprising, in this order, a first nonwoven layer (5), a membrane layer (6) and a second nonwoven layer (7), the first and second nonwoven layers (5, 7) comprising polypropylene fibers, and wherein the first nonwoven layer (5) has a weight per unit area of between 60 g/m**²** and 200 g/m**²** and the second nonwoven layer (7) has a weight per unit area of between 40 g/m**²** and 200 g/m**²**, and the membrane layer (6) is formed on the basis of a thermoplastic elastomer, as a nail-tight under-roof membrane (1) or façade membrane for a closed façade, the sealing membrane consists of the first nonwoven layer (5), the membrane layer (6) and the second nonwoven layer (7), the first nonwoven layer (5) optionally being bonded to the membrane layer (6) via an adhesive layer (8) and/or the membrane layer (6) optionally being bonded to the second nonwoven layer (7) via an adhesive layer (9).

13. The use according to claim 12, **characterized in that** the nail-tight under-roof membrane (1) or façade membrane is formed as a sealing membrane according to one of claims 2 to 11.

## Revendications

1. Membrane d'étanchéité étanche au niveau des clous, en particulier membrane pour sous-toiture (1) ou membrane pour façade, comprenant, dans l'ordre ci-dessous, une première couche de non-tissé (5), une couche de membrane (6) et une seconde couche de non-tissé (7), dans laquelle la première couche de non-tissé (5) comprend des fibres de polypropylène et la seconde couche de non-tissé (7) comprend des fibres de polypropylène et la couche de membrane (6) est produite à partir d'un élastomère thermoplastique, la seconde couche de non-tissé (7) présente une masse surfacique comprise entre 40 g/m**²** et 200 g/m**²**, et la première couche de non-tissé (5) présente une masse surfacique comprise entre 60 g/m**²** et 200 g/m**²**, **caractérisée en ce que** la membrane d'étanchéité est constituée de la première couche de non-tissé (5), de la couche de membrane (6) et de la seconde couche de non-tissé (7), dans laquelle la première couche de non-tissé (5) est éventuellement reliée à la couche de membrane (6) par l'intermédiaire d'une couche d'adhésif (8) et/ou la couche de membrane (6) est éventuellement reliée à la seconde couche de non-tissé (7) par l'intermédiaire d'une couche d'adhésif (9).

2. Membrane d'étanchéité étanche au niveau des clous selon la revendication 1, **caractérisée en ce que** les première et seconde couches de non-tissé (5, 7) sont constituées de fibres de polypropylène.

3. Membrane d'étanchéité étanche au niveau des clous selon la revendication 1, **caractérisée en ce que** la première et/ou la seconde couche de non-tissé (5, 7) présente au moins deux types de fibres différents.

4. Membrane d'étanchéité étanche au niveau des clous selon l'une quelconque des revendications 1 à 3, **caractérisée en ce que** l'élastomère thermoplastique est un élastomère thermoplastique expansé.

5. Membrane d'étanchéité étanche au niveau des clous selon l'une quelconque des revendications 4, **caractérisée en ce que** l'élastomère thermoplastique expansé est une mousse d'élastomère à cellules fermées.

6. Membrane d'étanchéité étanche au niveau des clous selon l'une quelconque des revendications 1 à 5, **caractérisée en ce que** l'élastomère thermoplastique est un polyuréthane thermoplastique.

7. Membrane d'étanchéité étanche au niveau des clous selon la revendication 6, **caractérisée en ce que** le polyuréthane thermoplastique est un polyéther-polyuréthane thermoplastique.

8. Membrane d'étanchéité étanche au niveau des clous selon la revendication 6 ou 7, **caractérisée en ce que** le polyuréthane thermoplastique est un polyuréthane thermoplastique aromatique.

9. Membrane d'étanchéité étanche au niveau des clous selon les revendications 6 à 8, **caractérisée en ce que** le polyuréthane thermoplastique est produit à partir d'au moins un diol et d'au moins un polyol, respectivement par réaction avec au moins un diisocyanate, le rapport molaire diol/polyol étant compris entre 10:1 et 1:10.

10. Membrane d'étanchéité étanche au niveau des clous selon l'une quelconque des revendications 1 à 9, **caractérisée en ce que** la première et/ou la seconde couche de non-tissé (5, 7) est rendue hydrophobe.

11. Membrane d'étanchéité étanche au niveau des clous selon l'une quelconque des revendications 1 à 10, **caractérisée en ce que** la couche de membrane (6) n'est reliée que localement, en particulier seulement ponctuellement, à la première et/ou à la seconde couche de non-tissé (5, 7).

12. Utilisation d'un film multicouche comprenant, dans l'ordre ci-dessous, une première couche de non-tissé (5), une couche de membrane (6) et une seconde couche de non-tissé (7), dans laquelle les première et seconde couches de non-tissé (5, 7) comprennent des fibres de polypropylène, et dans laquelle la première couche de non-tissé (5) présente une masse surfacique comprise entre 60 g/m**²** et 200 g/m**²** et la seconde couche de non-tissé (7) présente une masse surfacique comprise entre 40 g/m**²** et 200 g/m**²**, et la couche de membrane (6) est produite à partir d'un élastomère thermoplastique, ce qui fournit une membrane pour sous-toiture (1) étanche au niveau des clous ou une membrane pour façade étanche au niveau des clous et destinée à une façade fermée, dans laquelle la membrane d'étanchéité est constituée de la première couche de non-tissé (5), de la couche de membrane (6) et de la seconde couche de non-tissé (7), dans laquelle la première couche de non-tissé (5) est éventuellement reliée à la couche de membrane (6) par l'intermédiaire d'une couche d'adhésif (8) et/ou la couche de membrane (6) est éventuellement reliée à la seconde couche de non-tissé (7) par l'intermédiaire d'une couche d'adhésif (9).

13. Utilisation selon la revendication 12, **caractérisée en ce que** la membrane pour sous-toiture (1) étanche au niveau des clous ou la membrane pour façade étanche au niveau des clous est produite sous la forme d'une membrane d'étanchéité selon l'une quelconque des revendications 2 à 11.
